# EUROPEAN PATENT SPECIFICATION

(11) **EP 2 472 109 B1**
(45) Date of publication and mention of the grant of the patent: **29.06.2016**
(21) Application number: 11150106.0
(22) Date of filing: 04.01.2011
(51) Int. Cl.: F03D 80/70, F16N 19/00, F16N 31/00

(54) **Repository for a lubricant**
Behälter für ein Schmiermittel
Réserve pour lubrifiant

(43) Date of publication of application: 04.07.2012
(73) Proprietor: Siemens Aktiengesellschaft, 80333 München (DE)
(72) Inventor: Bauer, Oto, 7330 Brande (DK)

(56) References cited:
- EP-A1- 0 806 602
- EP-A2- 0 438 970
- DE-U1-202010 013 614
- JP-A- 60 159 500
- JP-A- 2007 182 978

## Description

The invention relates to a repository for a lubricant, comprising a closed hollow base body for accommodating a lubricant, with the base body comprising an inlet for filling in a lubricant, but having no gas outlet.

Changing or disposing of used lubricants such as oil, grease or the like in bearing assemblies or bearings of wind turbines, that is particularly the bearing assemblies of the rotor hub or the rotor blades is an important measure in order to maintain performance and lifetime of the wind turbine. Thereby, the bearing assemblies or bearings are provided with new lubricant replacing the used lubricant.

In order to dispose of the used lubricant a bearing at least temporarily comprises a repository or container collecting the used lubricant. Therefore, different types of repositories are available.

DE 20 2010 013 614 U1 shows an example of repository.

Thereby, repositories having gas outlets or gas filters prevent the build-up of internal pressure, yet these repositories usually have problems with leakage, that is once the repository is filled, the lubricant tends to leak out of the repository. Closed repositories, that is repositories without gas outlets or gas filters provide a dense principle yet, a counter pressure is generated in their inside while filling in the lubricant, so that the lubricant tends to escape through cavities. Further, closed repositories having pistons in their inside have been proposed, yet they represent a complex and costly principle.

Hence, it is the object of the invention to provide an improved repository for a lubricant.

This is achieved by a repository for a lubricant as described above, wherein the base body comprises an expanding means, with the expanding means being adapted to expand the base body from a compressed non-filled state in an expanded filled state by filling the lubricant into the base body.

The present invention provides a novel repository for a lubricant, which repository overcomes the drawbacks of respective repositories known from prior art, that is the inventive repository does neither lead to the build-up of a counter pressure while being filled nor exhibits any problems regarding leakage. The present repository is based on a constructive simple and thus, cost-effective principle having a deformable, that is expandable hollow base body, which is completely closed, that is leak-proof apart from the inlet (which inlet may comprise a number of separate inlets if need be).

Thereby, the base body is in a compressed state before filling and expands while being filled to its expanded, that is preferably a predetermined shaped filled state. Hence, filling of the hollow of the base body is not inhibited by a pressure build-up caused by gases inside the hollow of the base body since the volume of the base body increases in accordance with the progress of filling of the lubricant. Thus, the inner volume of the base body essentially corresponds to its respective filling state. In such a manner, the mechanical load on the sealing as well as the repository itself is reduced, that is the filled lubricant does not "attempt" to leave the base body.

Usually, the expansion is caused by the pressure applied by the lubricant flowing into the base body. If need be, the hollow of the base body may additionally be provided with an underpressure or vacuum in order to draw the lubricant into its inside. In this case, an appropriate sealing means has to be detached before filling the base body. The present repository may be easily discharged and hence, is reusable.

In favour, the base body has a concertina-like shape. Hence, the base body is foldable in terms of a bellows, that is it is folded in its compressed or non-filled state and at least partially unfolded in a filled or expanded state. The base body exhibits its maximum volume, that is is entirely filled in its completely unfolded state.

The expanding means may be adapted to expand the base body in continuous or step-wise manner. Thereby, continuous expansion of the base body refers to an essentially direct correlation of the filling degree with the volume. Accordingly, step-wise expansion of the base body refers to a step-like increase of volume depending on the applied pressure. Step-wise expansion may be compared to a so called click-click mechanism, whereby certain volumes of the base body may be attained with certain applied pressures. Hence, the applied pressure causes the base body to expand its inner volume in step-wise manner leading to an increase of volume and a decrease of the pressure within the base body.

Preferably, the inlet is a connection port adapted to be directly or indirectly connected to a bearing. The connection port is ready to be connected to the respective bearing giving rise to a fast and easy installation of the inventive repository. Thereby, the connection port may be at least partially provided with an outer thread. In such a manner, the connection port establishes a stable, yet easy detachable mechanical joint between the bearing preferably comprising a corresponding connection site for the connection port of the repository. Generally, the connection port may be built as a separate or integral part of the base body.

It is possible that the base body is accommodated in a hollow container. The hollow container serves as a support structure for the base body. Thus, the container protects the base body from damage. Therefore, it is preferred that the container shows a rigid behaviour, whereas the base body shows a flexible behaviour. In other words, the container is made of a mechanically stable, particularly rigid or hard material, whereas the base body is made of an elastic or soft material and behaves like an elastic bag or the like. The container is provided with respective openings for the inlet of the base body. Aside, the container may be provided with a lid or the like in order to provide an access site to the base body. Preferably, the base body may be detached from the container.

The base body is favourably made of a polymer material. The same applies to the container. Thereby, the polymer materials having constant mechanical properties within temperatures ranging from -50° to +70°C are preferred, in such a manner, the repository may be used under different climatic conditions. Further, polymer materials are compatible and adaptable to different types of lubricants. Hence, both base body and container are preferably produced by injection moulding leading to advantages regarding functional integrity since both base body and container may be built as integral parts, as well as regarding production costs.

It is of advantage, when the base body or the base body and the container are at least partially transparent. In such a manner, the filling degree of the base body may be easily controlled. It is possible, that the entire base body may be transparent or merely certain, particularly defined portions. The same applies to the container. Transparent refers to all kinds of degrees of transparency assuring that the filling state of the base body is visually determinable. If need be, the base body or the container may be provided with a volumetric scaling or the like.

The invention further relates to a bearing assembly for a wind turbine, particularly for the rotor blades of a wind turbine, comprising a bearing, whereby at least one repository as described above is connected to a bearing component, particularly a bearing ring, of a respective bearing while disposing of the lubricant of the bearing. Disposal of used lubricant of the respective bearing of the bearing assembly is improved and easily feasible by means of the inventive repository which is temporarily connected to respective connection sides of the bearing.

Aside, the invention relates to a method for disposing of used lubricant of a bearing or bearing assembly of a wind turbine, particularly of a rotor blade of a wind turbine, comprising the steps of attaching a repository as described above to a bearing component, particularly a bearing ring, with the base body being in its compressed non-filled state, and filling the lubricant into the base body, thereby expanding the base body in its expanded state. The method is easily feasible and further assures that the lubricant only flows into the base body of the repository. Hence, leakage and other problems usually occurring while filling of respective repositories are excluded. After the base body has been completely filled with the lubricant, the repository is detached from the respective bearing component. The repository may be discharged and reused again in the same manner.

Further advantages and details of the present invention can be taken from the following detailed description of preferred embodiments of the invention as well as the principle drawings, whereby:
- fig. 1: shows a bearing during disposal of used lubricant having a number of repositories attached thereto;
- fig. 2: shows a perspective view of a repository in a compressed, non-filled state according to a first embodiment of the invention;
- fig. 3: shows a side view of a repository in a compressed, non-filled state according to a first embodiment of the invention;
- fig. 4: shows a perspective view of the repository of fig. 2, 3 in an expanded, filled state;
- fig. 5: shows a side view of the repository of fig. 2, 3 in an expanded, filled state; and
- fig. 6: shows a cut view of a repository according to a second embodiment of the invention.

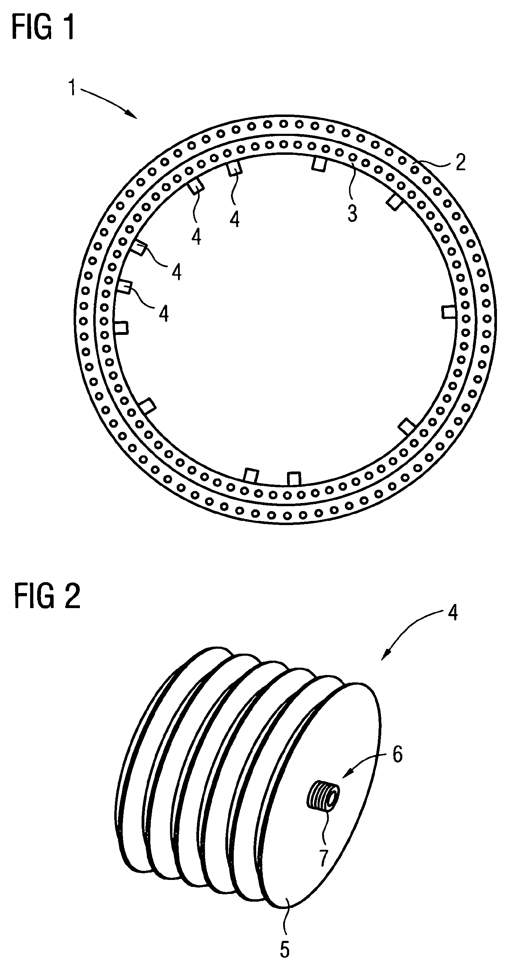

Fig. 1 shows a bearing 1 comprising an outer ring 2 and an inner ring 3 during disposal of used lubricant with the inner ring 3 having a number of repositories 4 attached thereto. The bearing 1 is part of a wind turbine, that is particularly serves as a support for a rotor blade. While filling the lubricant into the hollow base body 5 of the repository 4 (cf. fig. 2 - 6), the base body 5 expands from a compressed, non-filled state in a expanded, filled state, whereby the filling degree of the base body 5 essentially corresponds to its volume, that is the volume of the base body 5 substantially increases in accordance with the filling degree as will be described in more detail with reference to fig. 2 - 6.

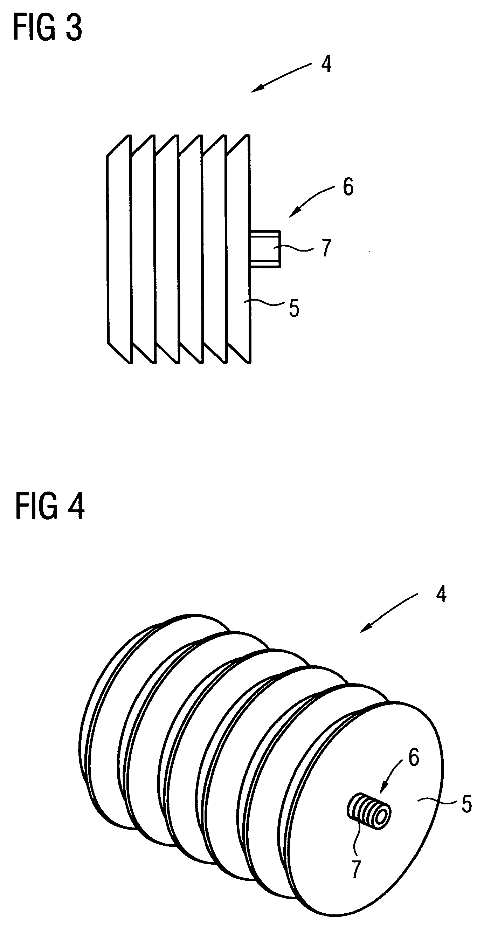

Fig. 2, 3 show a perspective and side view of a repository 4 in a compressed, non-filled state according to a first embodiment of the invention. The repository 4 comprises a hollow, concertina-like shaped base body 5 for accommodating a lubricant. The base body 5 comprises an inlet 6 for filling in the lubricant in the shape of a connection port 7. The connection port 7 is provided with an outer thread hence, the repository 4 is ready to be connected to a bearing having a respective connection site.

Apart from the inlet 6, the base body 5 is completely closed, that is particularly does not comprise any gas outlets, gas filters or other openings since these would lead to leakage problems while filling and in the filled state.

The concertina-like shape of the base body serves in terms of an expanding means being adapted to expand the base body 5 from its compressed non-filled state (cf. fig. 2, 3) in its expanded filled state (cf. fig. 3, 4) by filling the lubricant into the base body 5. Expanding of the base body 5 is accompanied by unfolding of the base body 5 which may be compared to a bellows. Thereby, the expansion of the base body 5 while filling solves the problem of internal pressure build-ups since the volume of the base body 5 corresponds to its filling state. Further, mechanical stresses on sealings and the repository 4 itself may be reduced.

It is possible, that expanding of the base body 5 is carried out in continuous or step-wise manner. Continuous expansion of the base body 5 refers to a direct correlation of the filling degree with the volume, whereas step-wise expansion of the base body 5 means that the base body 5 has several preferred, predetermined expansion states corresponding to respective volumes and shapes. Thereby, a certain pressure is required in order to expand the base body 5 in a certain expansion state, that is expansion of the base body 5 is essentially depending on the pressure applied by the lubricant while flowing. The step-wise expansion is similar to a click mechanism.

The base body 5 is made of a transparent flexible, deformable polymer material such as PMMA, PET or a silicon-based polymer for instance providing the base body 5 with certain extensibility. Hence, the filling degree of the base body 5 is easily controllable.

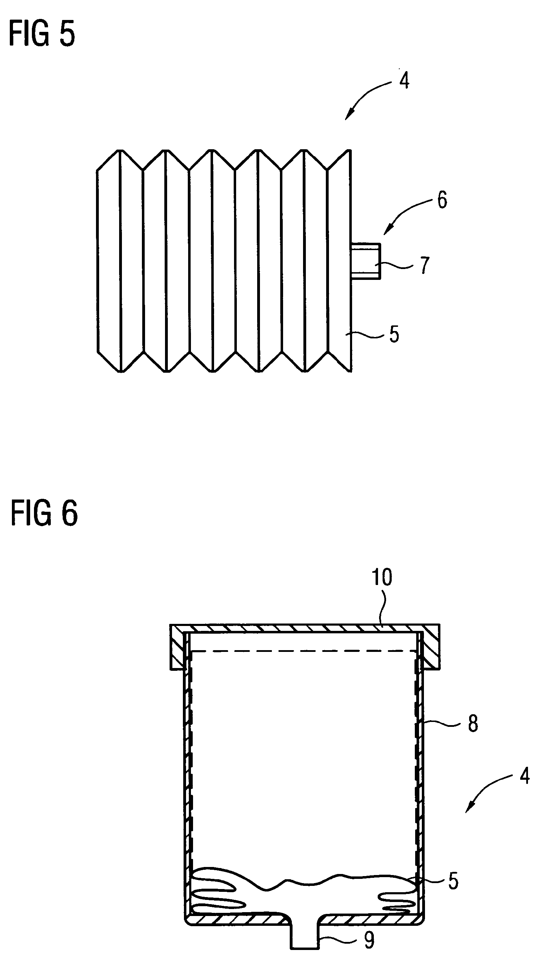

Fig. 6 shows a cut view of a repository 4 according to a second embodiment of the invention. In this case, the base body 5 is accommodated in a rigid container 8 made of PC for instance, which serves as a mechanical protection for the base body 5 from damage. The inner volume of the container 8 essentially corresponds to the volume of the base body 5 in its completely expanded, that is filled state (cf. the dotted line). The base body 5 is made of a soft and flexible material and may be deemed as an expandable bag within the container 8. The container 8 is provided with a respective connection port 9 in order to connect the container 8 to a bearing. Further, the container 8 is provided with a detachable lid 10 in order to provide an access to the base body 5, that is the base body 5 may be detached from the container 8 in order to empty the filled base body 5 giving rise to a reusability of the repository 4.

The inventive repository 4 provides an environmentally friendly, reusable, fatigue resistant principle, which is ready to be mounted to different types of bearings. Due to the polymer material, the repository 4 is compatible with a huge number of different types of lubricants. Additionally, the polymer material gives rise to lowered cost of manufacture. Further advantages of the repository 4 comprise the complete prevention of contamination of the surrounding area while disposing of the lubricant since internal pressure build-ups are minimised or completely annulled. In such a manner, service and maintenance costs of the wind turbine may be significantly reduced. Aside, the repository 4 may be used in a wide range of climatic conditions.

## Claims

1. Repository (4) for disposing of used lubricant of a bearing (1) when attached to the bearing (1), comprising a closed hollow base body (5) for accommodating a lubricant, with the base body (5) comprising an inlet (6) for filling in a lubricant, but having no gas outlet, wherein the base body (5) comprises an expanding means, with the expanding means being adapted to expand the base body (5) from a compressed non-filled into an expanded filled state by filling the lubricant into the base body (5), **characterised in that** the expanding means is adapted to expand the base body (5) in step-wise manner, whereby certain volumes of the base body may be attained with certain applied pressures.

2. Repository according to claim 1, wherein the base body (5) has a concertina-like shape.

3. Repository according to one of the preceding claims, wherein the inlet (6) is a connection port (7) adapted to be directly or indirectly connected to a bearing.

4. Repository according to claim 3, wherein the connection port (7) is at least partially provided with an outer thread.

5. Repository according to one of the preceding claims, wherein the base body (5) is accommodated in a hollow container (8).

6. Repository according to claim 5, wherein the container (8) shows a rigid behaviour, whereas the base body (5) shows a flexible behaviour.

7. Repository according to one of the preceding claims, wherein the base body (5) and/or the container (8) is made of a polymer material.

8. Repository according to one of the preceding claims, wherein the base body (5) or the base body (5) and the container (8) are at least partially transparent.

9. Bearing assembly for a wind turbine, particularly for a rotor blade of a wind turbine, comprising a bearing (1), whereby at least one repository (4) according to one of the preceding claims is connected to a bearing component, particularly a bearing ring (3), of a respective bearing (1) while disposing of the lubricant of the bearing (1).

10. Method for disposing of used lubricant of a bearing or bearing assembly of a wind turbine, particularly of a rotor blade of a wind turbine, comprising the steps of attaching a repository according to one of the claims 1 to 8 to a bearing component, particularly a bearing ring, with the base body being in its compressed non-filled state, and filling the lubricant into the base body, thereby expanding the base body in its expanded state.

## Patentansprüche

1. Reservoir (4) zum Entsorgen von Altschmiermittel aus einem Lager (1), wenn es an dem Lager (1) angebracht ist, mit einem geschlossenen, hohlen Grundkörper (5) zum Aufnehmen eines Schmiermittels, wobei der Grundkörper (5) zwar einen Einlass (6) zum Einfüllen eines Schmiermittels, aber keinen Gasauslass umfasst, wobei der Grundkörper (5) ein Expandiermittel umfasst, wobei das Expandiermittel so ausgelegt ist, dass es den Grundkörper (5) durch Einfüllen des Schmiermittels in den Grundkörper (5) aus einem komprimierten, ungefüllten in einen expandierten, gefüllten Zustand expandiert, **dadurch gekennzeichnet, dass** das Expandiermittel so ausgelegt ist, dass es den Grundkörper (5) schrittweise expandiert, wodurch mit bestimmten angelegten Drücken bestimmte Volumen des Grundkörpers erzielt werden können.

2. Reservoir nach Anspruch 1, bei dem der Grundkörper (5) eine ziehharmonikaartige Form aufweist.

3. Reservoir nach einem der vorhergehenden Ansprüche, bei dem es sich bei dem Einlass (6) um einen Verbindungsanschluss (7) handelt, der so ausgelegt ist, dass er direkt oder indirekt mit einem Lager verbunden wird.

4. Reservoir nach Anspruch 3, bei dem der Verbindungsanschluss (7) zumindest teilweise mit einem Außengewinde versehen ist.

5. Reservoir nach einem der vorhergehenden Ansprüche, bei dem der Grundkörper (5) in einem hohlen Behältnis (8) untergebracht ist.

6. Reservoir nach Anspruch 5, bei dem sich das Behältnis (8) durch steifes Verhalten auszeichnet, während sich der Grundkörper (5) durch flexibles Verhalten auszeichnet.

7. Reservoir nach einem der vorhergehenden Ansprüche, bei dem der Grundkörper (5) und/ oder das Behältnis (8) aus einem Polymermaterial hergestellt ist.

8. Reservoir nach einem der vorhergehenden Ansprüche, bei dem der Grundkörper (5) oder der Grundkörper (5) und das Behältnis (8) zumindest teilweise transparent sind.

9. Lagerbaugruppe für eine Windturbine, insbesondere für ein Rotorblatt einer Windturbine, mit einem Lager (1), wobei mindestens ein Reservoir (4) nach einem der vorhergehenden Ansprüche mit einer Lagerkomponente, insbesondere einem Lagerring (3), eines jeweiligen Lagers (1) verbunden ist, während das Schmiermittel aus dem Lager (1) entsorgt wird.

10. Verfahren zum Entsorgen von Altschmiermittel aus einem Lager oder einer Lagerbaugruppe einer Windturbine, insbesondere eines Rotorblatts einer Windturbine, mit folgenden Schritten: Anbringen eines Reservoirs nach einem der Ansprüche 1 bis 8 an einer Lagerkomponente, insbesondere einem Lagerring, wobei sich der Grundkörper in seinem komprimierten, ungefüllten Zustand befindet, und Einfüllen von Schmiermittel in den Grundkörper und dadurch Expandieren des Grundkörpers in seinen expandierten Zustand.

## Revendications

1. Réserve (4) pour se débarrasser d'un lubrifiant usagé d'un palier (1) lorsqu'elle est fixée au palier (1), comprenant un corps de base creux fermé (5) pour accueillir un lubrifiant, le corps de base (5) comprenant une admission (6) pour verser un lubrifiant, mais n'ayant pas d'évacuation de gaz, dans laquelle le corps de base (5) comprend un moyen de dilatation, le moyen de dilatation étant adapté pour dilater le corps de base (5) d'un état non rempli comprimé à un état rempli dilaté en versant le lubrifiant dans le corps de base (5), **caractérisée en ce que** le moyen de dilatation est adapté pour dilater le corps de base (5) d'une manière graduelle, moyennant quoi certains volumes du corps de base peuvent être atteints avec certaines pressions appliquées.

2. Réserve selon la revendication 1, dans laquelle le corps de base (5) a une forme de type accordéon.

3. Réserve selon l'une des revendications précédentes, dans laquelle l'admission (6) est un orifice de raccordement (7) adapté pour être raccordé directement ou indirectement à un palier.

4. Réserve selon la revendication 3, dans laquelle l'orifice de raccordement (7) est pourvu au moins partiellement d'un fil extérieur.

5. Réserve selon l'une des revendications précédentes, dans laquelle le corps de base (5) est logé dans un récipient creux (8).

6. Réserve selon la revendication 5, dans laquelle le récipient (8) présente un comportement rigide, tandis que le corps de base (5) présente un comportement souple.

7. Réserve selon l'une des revendications précédentes, dans laquelle le corps de base (5) et/ou le récipient (8) sont constitués d'un matériau polymère.

8. Réserve selon l'une des revendications précédentes, dans laquelle le corps de base (5) ou le corps de base (5) et le récipient (8) sont au moins partiellement transparents.

9. Ensemble palier pour une éolienne, en particulier pour une pale de rotor d'une éolienne, comprenant un palier (1), moyennant quoi au moins une réserve (4) selon l'une des revendications précédentes est raccordée à un composant de palier, en particulier une bague de palier (3), d'un palier respectif (1) tout en se débarrassant du lubrifiant du palier (1).

10. Procédé pour se débarrasser d'un lubrifiant usagé d'un palier ou d'un ensemble palier d'une éolienne, en particulier d'une pale de rotor d'une éolienne, comprenant les étapes consistant à fixer une réserve selon l'une des revendications 1 à 8 à un composant de palier, en particulier une bague de palier, le corps de base étant dans son état non rempli comprimé, et à verser le lubrifiant dans le corps de base, dilatant de ce fait le corps de base dans son état dilaté.
